Europäisches Patentamt

European Patent Office (11) Numéro de publication: **0 178 235**

Office européen des brevets **B1**

(12) FASCICULE DE BREVET EUROPEEN

(45) Date de publication du fascicule du brevet: **14.11.90** (51) Int. Cl.⁵: **G 06 F 9/46**

(21) Numéro de dépôt: **85420167.0**

(22) Date de dépôt: **18.09.85**

(54) Procédé et dispositif électronique pour l'exécution répartie d'une activité entre plusieurs sites différents.

(30) Priorité: **20.09.84 FR 8415258**

(43) Date de publication de la demande:
**16.04.86 Bulletin 86/16**

(45) Mention de la délivrance du brevet:
**14.11.90 Bulletin 90/46**

(84) Etats contractants désignés:
**AT BE CH DE GB IT LI LU NL SE**

(56) Documents cités:
**EP-A-0 113 516      US-A-4 387 427**

**IBM TECHNICAL DISCLOSURE BULLETIN, vol. 22, no. 5, octobre 1979, pages 1918-1923, New York, US; D.S. LAKE et al.: "Loosely coupled multiprocess model applied to a line switching architecture"**

**LOCAL NETWORKS FOR COMPUTER COMMUNICATIONS, PROCEEDINGS OF THE IFIP WORKING GROUP 6.4, Zürich, 27-29 aou7t 1980, pages 319-354, North-Holland Publishing Co., Amsterdam, NL; R.F. RASHID: "An inter-process communication facility for unix"**

(73) Titulaire: **INSTITUT NATIONAL DE RECHERCHE EN INFORMATIQUE ET EN AUTOMATIQUE
Domaine de Voluceau Rocquencourt
F-78153 Le Chesnay (FR)**

(72) Inventeur: **Banino, Jean Serge
12, rue de la Croix d'Arcy
F-78450 Villepreux (FR)**
Inventeur: **Guillemont, Marc
20, rue Gabriel Péri
F-78220 Viroflay (FR)**
Inventeur: **Morisset, Gérard
14, rue du Moulin
F-95610 Eragny Sur Oise (FR)**

(74) Mandataire: **de Beaumont, Michel
Cabinet Poncet 7, chemin de Tillier B.P. 317
F-74008 Annecy Cédex (FR)**

EP 0 178 235 B1

Courier Press, Leamington Spa, England.

## Description

La présente invention concerne les procédés et dispositifs électroniques pour exécuter de manière répartie une activité en faisant collaborer de manière cohérente plusieurs ensembles disposés sur des sites géographiquement différents.

Un problème que présente la collaboration de plusieurs ensembles électroniques géographiquement séparés réside dans la nécessité d'obtenir une activité globale cohérente, sans risque de blocage ou de mauvaise synchronisation.

La manière habituelle pour résoudre ce genre de problème consiste à concevoir un ensemble de moyens de commande hiérarchisés, avec un ensemble maître central élaborant et transmettant ses instructions à des ensembles esclaves de commande répartis pour gouverner des dispositifs actifs répartis dans chaque site.

Ces dispositions de type hiérarchique nécessitent des transmissions d'information relativement fréquentes et leur fiabilité est souvent réduite du fait des aléas de transmission; en outre, la hiérarchie induit une rigidité conférant au dispositif entier un défaut de souplesse et d'adaptabilité.

La présente invention a notamment pour objet d'éviter les inconvénients des dispositifs et procédés connus de type hiérarchique en proposant des moyens nouveaux permettant d'assurer les activités de façon totalement répartie, c'est-à-dire non seulement par l'utilisation de moyens d'action répartis, mais aussi par l'utilisation d'une architecture nouvelle des moyens de commande permettant le fonctionnement asynchrone des différents sites tout en assurant la cohérence de l'ensemble.

L'invention s'applique non seulement à des dispositifs comprenant plusieurs sites géographiquement éloignés, par exemple séparés par des distances importantes supérieures au kilomètre, mais aussi à des dispositifs dont les sites sont géographiquement plus rapprochés, par exemple disposés dans le même bâtiment, voire dans la même pièce, et même dans la même machine globale. Ainsi, selon la terminologie de la présente invention, on pourra considérer que se trouvent dans des sites différents des ensembles pouvant fonctionner de manière indépendante l'un de l'autre et reliés par des lignes d'intercommunication, quelle que soit la longueur de ces lignes.

Selon la terminologie de la présente invention, le terme "activités" peut recouvrir des opérations de natures très diverses. Par exemple, un dispositif selon la présente invention peut être spécialisé pour assurer une messagerie entre différents sites, c'est-à-dire pour acheminer des messages, les stocker en files d'attente dans des mémoires faisant office de boîtes aux lettres, éditer des messages pour prévenir le destinataire, émettre des acquittements, et effectuer de manière générale toutes opérations habituelles dans ce genre d'applications.

Un autre exemple d'utilisation d'un dispositif de la présente invention est la conduite d'un processus industriel. Ainsi, un dispositif pourrait, dans une chaîne de production automobile, assurer des opérations successives et variables de plusieurs postes de soudure permettant notamment la soudure des quatre ailes et du toit d'une voiture; la flexibilité et l'adaptabilité du dispositif de l'invention permettrait d'utiliser les mêmes postes de soudure et les mêmes ensembles de commande de ces postes pour assurer la fabrication successive de voitures de types différents.

Pour éviter les inconvénients des dispositifs de type hiérarchique, on a déjà proposé des structures non hiérarchisées répartissant une activité entre plusieurs ensembles de traitement. Une telle structure est par exemple décrite dans le document US-A-4387427. Dans ce document, des ensembles ont été partitionnés pour définir des acteurs. A chaque acteur est attribué un processeur et des portes d'accès avec files d'attente pour stocker des messages reçus des autres acteurs. La transmission de messages entre acteurs s'effectue au moyen de portes d'accès. Un noyau administre la répartition des messages parmi les acteurs.

Le document LOCAL NETWORKS FOR COMPUTER COMMUNICATIONS, PROCEEDINGS OF THE IFIP WORKING GROUP 6.4, RASHID, décrit également ment un dispositif dans lequel plusieurs ensembles de traitement exécutent de manière asynchrone des étapes de traitement. Des messages sont transmis entre les sous-ensembles, et sont stockés dans des portes d'accès avec files d'attente gérées par des noyaux. Les messages sont structurés, et contiennent notamment l'adresse de la porte d'accès émettrice, l'adresse d'une porte d'accès destinataire et le texte du message.

Ces documents ne comportent toutefois aucun enseignement quant à la façon d'assurer la cohérence de l'activité globale lorsque celle-ci est répartie entre plusieurs ensembles de traitement asynchrone. D'autre part, les activités de chacun des ensembles de traitement sont définies de manière rigide par les instructions enregistrées dans les mémoires associées à chaque ensemble de traitement. Il en résulte qu'un tel dispositif est difficilement flexible et adaptable à des activités en évolution.

Selon un autre objet de l'invention, la cohérence de l'ensemble du dispositif est assurée sans nécessiter une organisation hiérarchique, le déroulement des opérations s'effectuant au contraire de proche en proche grâce à un cheminement des instructions entre les unités successives qui agissent séparément les unes des autres de manière asynchrone.

Selon un objet particulièrement important, l'invention permet de réaliser une activité globale selon une succession d'étapes mises bout à bout et effectuées par différents ensembles sur des sites différents; selon l'architecture du dispositif de l'invention, pour l'exécution de certaines étapes, l'ensemble en fonction peut avoir été préalablement défini entièrement; toutefois, l'invention prévoit que l'ensemble peut être redéfini à chaque étape particulière, ses fonctions étant ainsi modifiées et paramétrées en tenant compte des informations reçues des ensembles ayant exécuté les étapes précédentes. On met ainsi bout à bout un certain nombre d'étapes d'activités, les unes définies statiquement dans les différents sites, et les autres définies dans des messages, le tout formant une activité cohérente.

Pour atteindre ces objets ainsi que d'autres, la présente invention prévoit un procédé répartissant l'activité entre plusieurs ensembles de traitement situés dans des sites différents, les ensembles étant formés chacun d'au moins un processeur connecté à des mémoires et à des interfaces d'entrée-sortie, les ensembles étant interconnectés par des moyens de communication; on partitionne au préalable les ensembles pour définir des acteurs susceptibles d'exécuter chacun, indépendamment des autres, une étape de traitement; à chaque acteur sont attribués un processeur et une partie de la mémoire du site, la partie de mémoire dédiée à l'acteur étant divisée au moins en une zone principale dans laquelle on enregistre une série d'instructions pour l'exécution de l'étape de traitement, une pluralité de zones secondaires définissant des portes d'accès à l'acteur, se comportant en files d'attente pour stocker des messages échangés avec des autres acteurs; à chaque étape de traitement, l'acteur exécute les instructions de sa zone principale de mémoire de manière asynchrone en fonction de messages reçus et présents à ses portes d'accès, et positionne, dans ses portes d'accès, des messages destinés aux autres acteurs et préparés pendant l'étape de traitement, puis envoie un signal de fin d'étape à un acteur spécialisé appelé noyau; chaque message est structuré en trois zones contenant respectivement l'adresse (pa) de la porte d'accès émettrice, l'adresse (pb) d'une porte d'accès destinataire au moins, et le texte du message; le noyau (N), reçoit le signal de fin d'étape, collecte les messages à transmettre, assure leur transmission et assure la sélection du prochain message à traiter par un acteur local; on associe à chaque activité à réaliser un message actif, dont le texte est formé d'une série d'instructions et de paramètres enregistrés dans une mémoire, et comprenant des informations de contrôle telles que la liste des étapes de traitement à suivre pour exécuter l'activité, des informations de contexte décrivant l'état d'exécution des informations de contrôle, des données pour paramétrer les étapes de traitement ultérieures; le message actif est envoyé initialement sur la porte d'accès de l'acteur correspondant à la première étape de traitement mentionnée dans la liste des étapes; au cours de chaque étape, l'acteur opérant modifie et met à jour le message actif et, en fin d'étape, le noyau analyse les informations de contexte du message actif pour déterminer l'étape suivante et l'adresse de la porte sur laquelle doit être envoyé le message actif.

Ces caractéristiques de la présente invention assurent une grande souplesse du dispositif. En effet, le message actif permet de définir les fonctions de l'acteur, pour l'opération en cours, en tenant compte d'une part de l'activité globale à réaliser, et d'autre part de tout l'historique représenté par les phases précédentes.

Selon un autre aspect de l'invention, un dispositif pour l'exécution répartie d'une activité entre plusieurs sites différents comprend des organes actifs répartis entre les sites et commandés par des ensembles de commande également répartis entre les sites et interconnectés par des lignes de communication; les ensembles de commande sont divisés chacun en au moins un acteur susceptible d'exécuter une étape de traitement indépendamment des autres acteurs, à chaque acteur étant attribués un processeur et une partie de la mémoire du site, la partie de mémoire de l'acteur étant divisée en au moins une zone principale dans laquelle on enregistre une série d'instructions pour l'exécution de l'étape de traitement, et en une pluralité de zones secondaires définissant des portes d'accès à l'acteur avec files d'attente pour stocker des messages échangés avec des autres acteurs; chaque message est structuré en trois zones contenant respectivement l'adresse de la porte d'accès émettrice, l'adresse d'une porte d'accès destinataire au moins, et le texte du message; on définit un acteur spécialisé, appelé noyau, qui détecte les fins d'étapes, collecte les messages à transmettre, assure leur transmission par l'intermédiaire des interfaces d'entrée-sortie et des lignes de transmission, et assure la sélection du prochain message à traiter par un acteur local; on réserve dans la mémoire de chaque acteur une zone destinée à recevoir un message actif, le message étant formé d'une série d'instructions et de paramètres enregistrés dans une mémoire, et comprenant des informations de contrôle telles que la liste des étapes de traitement à suivre pour exécuter l'activité, des informations de contexte décrivant l'état d'exécution des informations de contrôle, et des données pour paramétrer les étapes de traitement ultérieures, de sorte que les fonctions de l'acteur et des organes actifs associés sont déterminées, d'une part, par des instructions et données résidant en permanence dans l'acteur et, d'autre part, par le contenu du message actif.

D'autres objets, caractéristiques et avantages de la présente invention, ressortiront de la description suivante de modes de réalisation particulier, faite en relation avec les figures jointes, parmi lesquelles:

la figure 1 illustre l'architecture répartie d'un dispositif selon l'invention;

la figure 2 illustre les protocoles de communication de messages.

la figure 3 illustre un dispositif de messagerie; et

la figure 4 illustre un dispositif de production industrielle.

L'architecture Generale

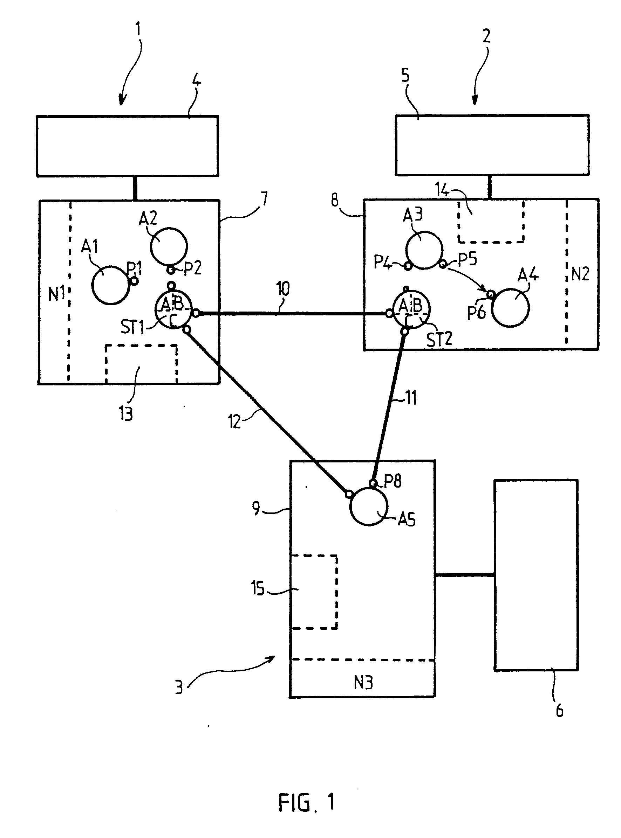

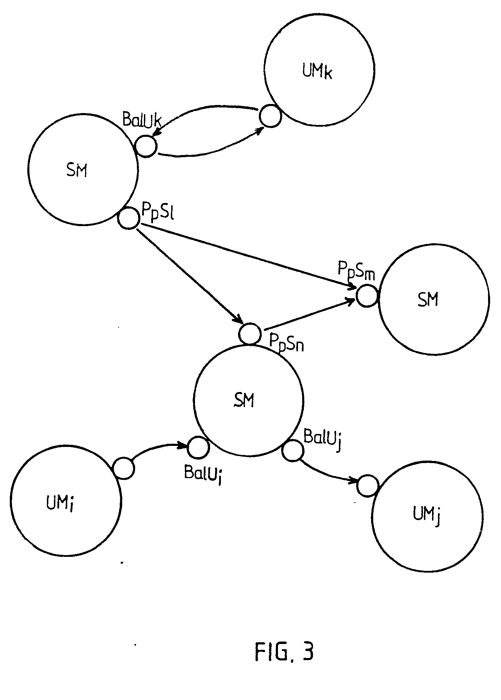

On a représenté sur la figure 1 l'architecture d'un dispositif de la présente invention. Le dispositif comprend plusieurs sites 1, 2, 3, chaque site comprenant des organes actifs respectivement 4, 5 et 6 commandés par des ensembles de commande respectivement 7, 8 et 9. Les ensembles de commande sont interconnectés par des lignes de communication 10, 11 et 12.

Chaque ensemble de commande associé à un site comprend au moins un processeur, respectivement 13, 14 et 15 associé à des mémoires et à des interfaces d'entrée-sortie connectées aux organes actifs et aux lignes d'intercommunication.

Chaque ensemble de commande est divisé en au moins un acteur susceptible d'exécuter à lui seul une étape de traitement indépendamment des autres acteurs. Par exemple, l'ensemble 7 comprend les acteurs A1 et A2, l'ensemble 8 comprend les acteurs A3 et A4, l'ensemble 9 comprend l'acteur A5. Cette répartition n'est donnée qu'à titre d'exemple et est susceptible de toutes variations possibles.

Chaque acteur comporte un processeur et une partie de la mémoire du site. L'acteur peut utiliser soit un processeur particulier, qui lui est dédié, soit utiliser un processeur commun tel que le processeur 13 commun à tous les acteurs du site 1. La partie de mémoire dédiée à l'acteur est divisée en au moins une zone principale, dans laquelle on enregistre une série d'instructions pour l'exécution de l'étape de traitement, et en une pluralité de zones secondaires définissant des portes d'accès à l'acteur avec des files d'attente pour stocker des messages reçus des autres acteurs. On a représenté par exemple les portes P1 de l'acteur A1, P2 de l'acteur A2, p4 et P5 de l'acteur A3, P6 de l'acteur A4 et P8 de l'acteur A5.

Un acteur tel que l'acteur A2 exécute une étape de traitement de manière asynchrone, sans tenir compte de l'activité simultanée des autres acteurs, selon les messages reçus et présents à ses portes d'accès. Pour cela, l'acteur peut comporter plusieurs portes d'accès, recevant chacune un nom ou adresse différents pour l'ensemble du dispositif.

Durant l'exécution de l'étape de traitement, l'acteur a accès à un message qui a déclenché cette étape, et à celui-là seulement, le message étant présent à l'une de ses portes d'accès; il a accès également à ses données internes enregistrées dans sa mémoire. Au cours du traitement, l'acteur élabore des messages destinés aux autres acteurs, et les positionne dans certaines de ses portes d'accès. L'étape de traitement se termine par l'envoi d'un signal de fin d'étape, reçu par un acteur spécialisé du même site, appelé noyau. Le noyau reçoit le signal de fin d'étape, collecte les messages à transmettre, et assure leur transmission par l'intermédiaire des interfaces d'entrée-sortie et des lignes de transmission. Le noyau assure en outre la sélection du prochain message à traiter par un acteur local du dispositif.

Par exemple, l'acteur A2, en fin d'étape de traitement, présente sur sa porte P2 un message destiné à l'acteur A3. Le noyau N1 assure la transmission, par la ligne 10, de ce message jusqu'à la porte P4 de l'acteur A3 du site 2. Lors d'une étape ultérieure, le noyau N2 sélectionne l'acteur A3, désigne le message contenu dans la porte P4 comme devant être exécuté, et l'acteur A3 exécute l'étape correspondante. A la fin de son étape de traitement, il positionne dans ses portes P4 et P5 des messages destinés respectivement aux acteurs A5 et A4. Le noyau N2 déclenche les transmissions de ces messages. L'exécution des deux étapes ultérieures pourra s'effectuer de manière indépendante par les acteurs A4 et A5 situés sur des sites différents, et conformément au message reçu.

Au cours de chaque étape de traitement, le noyau correspondant commande les organes actifs du site.

Chaque message émis sur les lignes 10, 11 ou 12, ou transmis entre les acteurs A3 et A4 d'un même site, est structuré en trois zones contenant respectivement l'adresse de la porte d'accès émettrice, par exemple P2, l'adresse d'une porte d'accès destinataire au moins, par exemple P4, et le texte du message.

Les Communications

Les transmissions de messages s'effectuent de manière différente selon que le message est destiné à un acteur du même site ou selon qu'il est destiné à un acteur d'un site différent. Pour résoudre cette difficulté, le noyau comporte une mémoire dans laquelle on a enregistré une table contenant les adresses de toutes les portes locales ouvertes du dispositif. Au cours d'une opération préliminaire, le noyau compare l'adresse de la porte d'accès destinataire, par exemple P4, avec sa table des portes, et détermine si la porte destinataire appartient à un acteur situé dans le même site ou non. Dans le cas d'une transmission dans le même site, par exemple entre P5 et P6, le noyau N2 transmet le message dans la file d'attente de la porte P6 destinataire.

S'il s'agit de sites différents, par exemple une transmission entre les portes P2 et P4, le noyau N1 transmet le message dans la file d'attente d'une porte d'accès d'un acteur local spécialisé ST1 du site 1, acteur appelé station de transport, et déclenche une étape de traitement de la station de transport ST1.

La station de transport est un acteur spécialisé de chaque site, comprenant des portes et une zone de mémoire dans laquelle on a enregistré une table A contenant les noms de toutes les portes locales ouvertes, une table B contenant les noms de portes distantes avec leur site de résidence, une table C contenant les adresses réseau des autres stations de transport.

L'étape de traitement de la station de transport, lors d'une émission, consiste à rechercher tout d'abord si l'adresse (P4) du destinataire se trouve dans sa table B. Dans l'affirmative, la station de transport envoie le message vers le site 2 de résidence de l'acteur destinataire A3 et attend un acquittement. Si l'acquittement est reçu, la transmission est terminée. Si l'acquittement n'est pas reçu au bout d'un temps prédéterminé, ou est négatif, la station ST1 retire la valeur de l'adresse P4 de la table B et poursuit ses recherches comme ci-après, c'est-à-dire comme si l'adresse P4 n'avait pas été trouvée dans sa table B lors de la phase initiale.

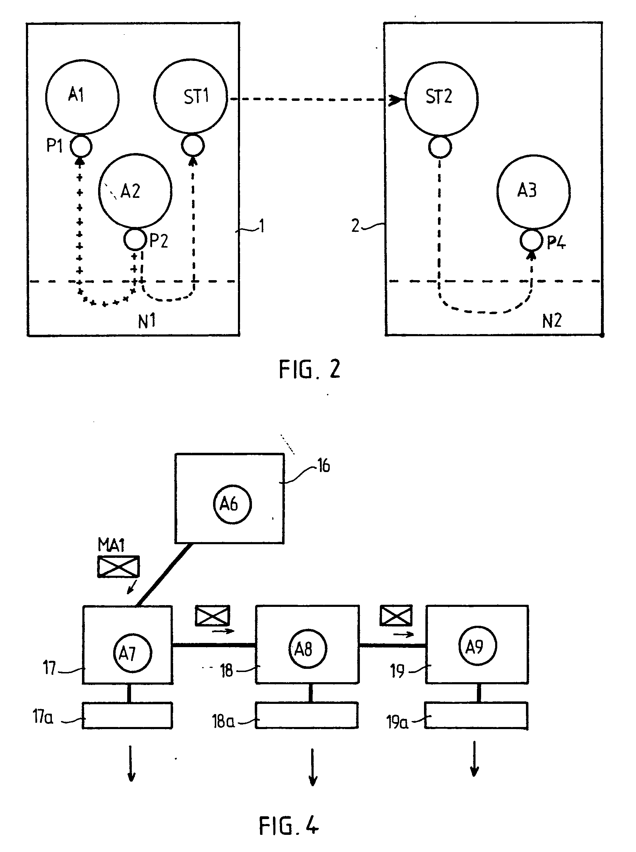

Dans les cas où l'adresse P4 du destinataire ne se trouve pas dans la table B, la station de transport envoie le message successivement aux autres stations de transport répertoriées dans sa table C, par exemple ST2 du site 2 comme le représente la figure 2 et, à réception d'un acquittement, met à jour sa table B en portant l'adresse p4 au regard du site correspondant dans sa table, et la transmission est terminée.

L'étape de traitement de la station de transport, lors d'une réception, consiste à rechercher tout d'abord si l'adresse reçue est répertoriée dans sa propre table A; dans l'affirmative, la station de transport transmet le message vers l'acteur local (A3) destinataire, et renvoie un acquittement vers la station de transport émettrice ST1. Dans la négative, elle renvoie un acquittement négatif vers la station de transport émettrice.

## Premier Exemple

Un exemple de messagerie est illustré par la figure 3. On utilise alors des acteurs de deux types: des serveurs de messagerie SM qui sont des acteurs permanents, à raison d'un par site; des utilisateurs de messagerie UM qui sont des acteurs temporaires, à raison d'un par utilisateur humain; ils peuvent apparaître sur n'importe quel site, et font office de boîte à lettres.

Chaque serveur de messagerie gère un ensemble de boîte à lettres et les messages dans chaque boîte, et surveille les autres serveurs de messagerie. Si un serveur de messagerie SMi tombe en panne, les messages qui sont dans les boîtes à lettres gérées par ce serveur sont temporairement inaccessibles, et un serveur SMj crée des copies des boîtes à lettres gérées par SMi, de sorte que ces copies puissent recevoir les nouveaux messages qui leur sont envoyés et être ainsi à nouveau accessibles.

Un acteur utilisateur de messagerie UM peut envoyer un message dans une boîte à lettres et lire les messages dans sa boîte à lettres. Chaque boîte à lettre est représentée par une porte de l'acteur UM. Les serveurs de messagerie comportent des portes spécialisées BalU pour les transmissions avec les utilisateurs de messagerie UM, et des portes spécialisées PpS pour les transmissions avec les autres serveurs de messagerie.

## Les Messages Actifs

Selon un mode de réalisation préféré de l'invention, les acteurs reçoivent en outre des messages particuliers appelés messages actifs.

Le message actif est déterminé en fonction de chaque activité à réaliser. Il est formé d'une série d'instructions et de paramètres enregistrés dans une mémoire et comprenant des informations de contrôle telles que la liste des étapes de traitement à suivre pour exécuter l'activité, des informations de contexte telles que la liste des étapes déjà exécutées, et des données pour paramétrer l'étape de traitement ultérieure. Le noyau de l'un des sites, récepteur initial du message actif, adresse initialement ce message sur la porte d'accès de l'acteur correspondant à la première étape de traitement mentionnée dans la liste des étapes du message actif.

Par la suite, au cours de chaque étape, l'acteur opérant modifie et met à jour le message actif, par exemple en indiquant dans la zone des informations de contexte que l'étape qu'il réalise est exécutée, en modifiant également les données produites au cours de son étape de traitement, indiquant par exemple le résultat du contrôle des opérations effectuées par les organes actifs en fonction; en fin d'étape, le noyau analyse le contexte du message actif pour déterminer l'étape suivante et notamment l'adresse des portes où les messages doivent être envoyés et en particulier où le message actif doit être adressé. Les autres opérations de transmission s'effectuent comme cela a été décrit précédemment.

Dans le cadre de l'utilisation de messages actifs, il peut être utile de réaliser plusieurs phases en parallèle, ou des activités parallèles. On définit pour cela, dans au moins un site, un acteur spécialisé S qui duplique le message actif en autant de messages nécessaires pour les acteurs devant intervenir en parallèle, en spécifiant dans chaque message divisionnaire les points de jonction des étapes ultérieures, c'est-à-dire les phases à l'issue desquelles les résultats doivent être regroupés par l'acteur spécialisé S. Après la jonction, l'acteur spécialisé rassemble les données des messages actifs divisionnaires pour reconstruire un message actif global, puis analyse le contexte du message actif global et le transmet à l'acteur désigné.

## Second Exemple

On a représenté sur la figure 4, de façon schématique, un dispositif assurant la conduite d'un processus industriel de soudure dans une chaîne de montage pour l'industrie automobile.

A titre d'exemple, un acteur A6, dans le site 16, initialise le processus en émettant un message actif MA1 vers l'acteur A7 du site 17. Le site 17 comporte des organes actifs 17a capables d'effectuer la soudure d'une partie de la carosserie de voiture. Les organes actifs 17a sont pilotés par l'acteur A7 en fonction du message actif reçu. A la fin de la première étape, l'acteur A7 modifie le message actif, tenant compte en particulier des résultats obtenus au cours de cette première étape, et émet le message modifié à l'attention de l'acteur A8 du site 18. De la même manière, les organes actifs 18a du site 18 effectuent la soudure d'une seconde partie de carosserie, conformément aux instructions de l'acteur A8 qui, en fin d'étape, modifie le message actif et l'adresse à l'acteur A9 du site 19 pour soudure d'une troisième partie par les organes actifs 19a, et ainsi de suite.

Les messages actifs apportent une grande souplesse au dispositif. En effet, supposons que le poste de soudure précédent n'ait pas fonctionné correctement, le dispositif pourrait charger l'acteur en cours de réparer les anomalies en modifiant ses fonctions habituelles pour le rendre apte à exécuter les fonctions du poste précédent ainsi que les siennes, et cela sans arrêter la chaîne de fabrication.

## Revendications

1. Procédé pour l'exécution répartie d'une activité au moyen de plusieurs ensembles de traitement (1, 2, 3), les ensembles de traitement comprenant chacun au moins un processeur (13, 14, 15) connecté à des mémoires et à des interfaces d'entrée/sortie et étant interconnectés par des lignes de communication (10, 11, 12), procédé dans lequel:

a) on partitionne au préalable les ensembles pour définir des acteurs (A1, A2, A3, A4, A5) susceptibles d'exécuter chacun, indépendamment des autres, une étape de traitement, à chaque acteur étant attribués un processeur et une partie de la mémoire du site, la partie de mémoire dédiée à l'acteur étant divisée en au moins une zone principale, dans laquelle on enregistre une série d'instructions pour l'exécution de l'étape de traitement, une pluralité de zones secondaires définissant des portes d'accès (P1-P8) à l'acteur, se comportant en files d'attente pour stocker des messages échangés avec des autres acteurs;

b) à chaque étape de traitement, l'acteur exécute les instructions de sa zone principale de mémoire de manière asynchrone en fonction de messages reçus et présents à ses portes d'accès (P1-P8), et positionne, dans ses portes d'accès, des messages destinés aux autres acteurs et préparés pendant l'étape de traitement, puis envoie un signal de fin d'étape à un acteur spécialisé appelé noyau;

c) le noyau (N1, N2, N3), reçoit le signal de fin d'étape, collecte les messages à transmettre, assure leur transmission éventuellement par l'intermédiaire des interfaces d'entrée/sortie et des lignes de communication, et assure la sélection du prochain message à traiter par un acteur local;

caractérisé en ce que:

d) chaque message est structuré en trois zones contenant respectivement l'adresse de la porte d'accès émettrice (P2), l'adresse d'une porte d'accès destinataire (P4) au moins, et le texte du message;

e) on associe à chaque activité à réaliser un message actif, dont le texte est formé d'une série d'instructions et de paramètres enregistrés dans une mémoire, et comprenant des informations de contrôle telles que la liste des étapes de traitement à suivre pour exécuter l'activité, des informations de contexte décrivant l'état d'exécution des informations de contrôle, des données pour paramétrer les étapes de traitement ultérieures;

f) le message actif est envoyé initialement sur la porte d'accès de l'acteur correspondant à la première étape de traitement mentionnée dans la liste des étapes;

g) au cours de chaque étape, l'acteur opérant modifie et met à jour le message actif;

h) en fin d'étape, le noyau analyse les informations de contexte du message actif pour déterminer l'étape suivante et l'adresse de la porte sur laquelle doit être envoyé le message actif.

2. Procédé selon la revendication 1, caractérisé en ce que, lors de la transmission d'un message, le noyau (N1) compare l'adresse (P4) de la porte d'accès destinataire à une table de portes ouvertes, et détermine ai la porte destinataire appartient à un acteur situé dans le même site ou non, et:

s'il s'agit du même site, le noyau transmet directement le message dans la file d'attente de la porte destinataire;

s'il s'agit de sites différents, le noyau transmet le message dans la file d'attente d'une porte d'accès d'un acteur local spécialisé appelé station de transport (ST1), et déclenche une étape de traitement de la station de transport.

3. Procédé selon la revendication 2, caractérisé en ce que:

la partie de mémoire affectée à la station de transport (ST1) de chaque site comprend en outre une zone dans laquelle on a enregistré une table A contenant les noms uniques de toutes les portes locales ouvertes, une table B contenant les noms uniques de portes distantes avec leur site de résidence, une table C contenant les adresses-réseau des autres stations de transport (ST2, ST3),

l'étape de traitement de la station de transport en émission (ST1) comprend la succession des phases suivantes:

a) rechercher si l'adresse (P4) du destinataire se trouve dans la table B.

dans l'affirmative envoyer le message vers le site de résidence (2) de l'acteur destinataire et attendre un acquittement,

si l'acquittement est reçu la transmission est terminée,

si l'acquittement n'est pas reçu au bout d'un temps prédéterminé ou est négatif, retirer la valeur de l'adresse (P4) de la table B et poursuivre par la phase b) ci-après:

b) si l'adresse (P4) du destinataire ne se trouve pas dans la table B, envoyer le message successivement aux autres stations de transport répertoriées dans la table C et, à réception d'un acquittement, mettre à jour la table B;

l'étape de traitement de la station de transport en réception (ST2) comprend les phases suivantes:

c) rechercher si l'adresse reçue (P4) est répertoriée dans sa propre table A,

dans l'affirmative, transmettre le message vers l'acteur local destinataire, et renvoyer un acquittement vers la station de transport émettrice (ST1),

dans la négative, renvoyer un acquittement négatif vers la station de transport émettrice (ST1).

4. Procédé selon la revendication 1, caractérisé en ce que, pour exécuter des activités parallèles, on définit un acteur spécialisé (S) qui effectue les opérations suivantes:

recopier le message actif en spécifiant dans des messages divisionnaires les points de jonction des étapes ultérieures;

après la jonction, rassembler les données des messages actifs divisionnaires pour reconstruire un message actif global,

analyser le contenu du message actif global et le transmettre à l'acteur désigné.

5. Dispositif électronique pour l'exécution répartie d'une activité entre plusieurs sites (1, 2, 3) différents, comprenant des organes actifs (4, 5, 6) répartis entre les sites et commandés par des ensembles de commande (7, 8, 9) également répartis entre les sites et interconnectés par des lignes de communication (10, 11, 12), chaque ensemble de commande associé à un site comprenant au moins un processeur (13, 14, 15) associé à des mémoires et à des interfaces d'entrée/sortie connectées aux organes actifs et aux lignes, dans lequel:

les ensembles de commande (7, 8, 9) sont divisés chacun en au moins un acteur (A1, A2, A3, A4, A5) susceptible d'exécuter une étape de traitement indépendamment des autres acteurs, à chaque acteur étant attribués un processeur et une partie de la mémoire du site, la partie de mémoire de l'acteur étant divisée en au moins une zone principale dans laquelle on enregistre une série d'instructions pour l'exécution de l'étape de traitement, et en une pluralité de zones secondaires définissant des portes d'accès (P1-P8) à l'acteur avec files d'attente pour stocker des messages échangés avec des autres acteurs;

on définit un acteur spécialisé, appelé noyau (N1), qui détecte les fins d'étapes, collecte les messages à transmettre, assure leur transmission par l'intermédiaire des interfaces d'entrée/sortie et des lignes de communication, et assure la sélection du prochain message à traiter par un acteur local;

caractérisé en ce que:

chaque message est structuré en trois zones contenant respectivement l'adresse de la porte d'accès émettrice, l'adresse d'une porte d'accès destinataire au moins, et le texte du message;

on réserve dans la mémoire de chaque acteur une zone destinée à recevoir un message actif, le message actif étant formé d'une série d'instructions et de paramètres enregistrés dans une mémoire, et comprenant des informations de contrôle telles que la liste des étapes de traitement à suivre pour exécuter l'activité, des informations de contexte décrivant l'état d'exécution des informations de contrôle, et des données pour paramétrer les étapes de traitement ultérieures, de sorte que les fonctions de l'acteur et des organes actifs associés sont déterminées, d'une part, par des instructions et données résidant en permanence dans l'acteur et, d'autre part, par le contenu du message actif.

6. Dispositif selon la revendication 5, caractérisé en ce que les acteurs d'un même site (A1, A2) utilisent le ou les mêmes processeurs (13).

7. Dispositif selon la revendication 5, caractérisé en ce que chaque site comprend un acteur spécialisé appelé station de transport (ST) qui assure la transmission d'un message d'un site à l'autre par l'intermédiaire des lignes de communication (10, 11, 12), la station de transport (ST) comprenant une mémoire dans laquelle on a défini une zone pour recevoir l'enregistrement d'une table A contenant les noms de toutes les portes locales ouvertes, une table B contenant les noms de portes distantes avec leur site de résidence, et une table C contenant les adresses des autres stations de transport.

8. Dispositif selon la revendication 5, caractérisé en ce qu'il comprend en outre des acteurs spécialisés (S) qui effectuent les opérations suivantes:

dupliquer le message actif en spécifiant dans les messages divisionnaires les points de jonction des étapes ultérieures;

après la jonction, rassembler les données des messages actifs divisionnaires pour reconstruire un message actif global;

analyser le contexte du message actif unique et le transmettre à l'acteur désigné.

**Patentansprüche**

1. Verfahren zur verteilten Ausführung einer Aktivität mit Hilfe von mehreren Bearbeitungskomplexen (1, 2, 3), deren jeder mindestens einen Prozessor (13, 14, 15), der mit Speichern und Ein-/Ausgangs-Zwischenstufen verbunden ist, umfaßt und die untereinander durch Kommunikationsleitungen (10, 11, 12) verbunden sind, worin:

a) die Bearbeitunskomplexe von vornherein so unterteilt werden, daß Aktionseinheiten (A1, A2, A3, A4, A5) definiert sind, die jede unabhängig von den anderen einen Bearbeitungsabschnitt durchführen können und denen jeweils ein Prozessor und ein Teil des Speichers des betreffenden Ortes zugeordnet sind, wobei der Speicherteil, der der Aktionseinheit gewidmet ist, geteilt wird, und zwar in mindestens einen Hauptbereich, in dem eine Reihe von Befehlen zur Durchführung in dem Bearbeitungsabschnitt eingetragen wird, und eine Vielzahl von Nebenbereichen, welche Zugriffs-Tore (P1—P8) für die Aktionseinheiten darstellen, die als Warteschlangen dienen, in denen die mit anren Aktionseinheiten ausgetauschten Nachrichten gespeichert werden;

b) in jedem Bearbeitungsabschnitt führt die Aktionseinheit die Befehle ihres Speicher-Hauptbereiches asynchron aus, abhängig von den erhaltenen und in ihren Zugriffs-Toren (P1—P8) vorhandenen Nachrichten, und setzt in ihren Zugriffs-Toren Nachrichten ab, die für andere Aktionseinheiten bestimmt sind und während des Bearbeitungsabschnitts aufbereitet werden, um schließlich ein Signal "Ende des Abschnitts" an eine spezialisierte Aktionseinheit, "Kern" genannt, zu senden:

c) der Kern (N1, N2, N3) empfängt das Signal "Ende des Abschnitts", sammelt die zu übermittelnden Nachrichten, stellt ihre Übertragung sicher, gegebenenfalls über Vermittlung von Ein-/Ausgangs-Zwischenstufen und Kommunkationsleitungen, und sichert die Auswahl der nächsten Nachricht, die von einer lokalen Aktionseinheit behandelt werden soll;

dadurch gekennzeichnet, daß

d) jede Nachricht in 3 Bereiche strukturiert ist, welche die Adresse des aussendenden Zugriffs-Tores (P2) bzw. mindestens eines empfangenden Zugriffs-Tores (P4) bzw. den Text der Nachricht enthalten;

e) jeder durchzuführenden Aktivität eine aktive Nachricht zugeordnet wird, deren. Text aus einer Reihe von in einem Speicher eingetragenen Befehlen und Parametern gebildet wird und die Steuerinformationen enthält, wie zum Beispiel die Liste der Bearbeitungsabschnitte, die zur Durchführung der Aktivität verfolgt werden müssen, und Begleitinformationen, die den Ausführungszustand der Steuerinformationen beschreiben, und weiters Daten, mit denen die späteren Bearbeitungsabschnitte parametrisiert werden;

f) die aktive Nachricht zunächst an das Zugriffs-Tor derjenigen Aktionseinheit gesandt wird, der dem ersten der in der Liste der Abschnitte genannten Bearbeitungsabschnitte entspricht;

g) im Laufe jedes Abschnitts modifiziert und aktualisiert die gerade arbeitende Aktionseinheit die aktive Nachricht;

h) am Schluß des Abschnitts analysiert der Kern die Begleitinformationen der aktiven Nachricht, um den nächsten Abschnitt und die Adresse des Tores, an das die aktive Nachricht gesandt werden soll, zu bestimmen.

2. Verfahren nach Anspruch 1, dadurch gekennzeichnet, daß während der Übermittlung einer Nachricht der Kern (N1) die Adresse (P4) des empfangenden Zugriffs-Tores mit einer Liste von offenen Toren vergleicht und feststellt, ob das Empfangs-Tor einer am selben Ort befindlichen Aktionseinheit angehört oder nicht und:

wenn es sich um denselben Ort handelt, der Kern die Nachricht direkt in die Warteschlange des Empfangs-Tores übermittelt.

wenn es sich um verschiedene Orte handelt, der Kern die Nachricht in die Warteschlange eines Zugriffs-Tores einer lokalen spezialisierten Aktionseinheit, genannt Transportstation (ST1) übermittelt und in der Transportstation einen Bearbeitungsabschnitt auslöst.

3. Verfahren nach Anspruch 2, dadurch gekennzeichnet, daß:

der der Transportstation (ST1) jedes Ortes zugewiesene Speicherteil einen zusätzlichen Bereich umfaßt, in dem Tabellen eingetragen wurden, und zwar eine Tabelle A, die die eindeutigen Namen aller offenen lokalen Tore enthält, eine Tabelle B, die die eindeutigen Namen der entlegenen Tore samt dem zugehörigen Ort enthält und eine Tabelle C, die die Netz-Adressen der anderen Transportstationen (ST2, ST3) enthält,

der Bearbeitungsabschnitt der aussendenden Transportstation (ST1) die Abfolge der folgenden Schritte umfaßt:

a) suchen, ob sich die Adresse (P4) des Empfängers in der Tabelle B befindet;

wenn ja, die Nachricht an den Ort (2) der Empfänger-Aktionseinheit senden und auf eine Quittung warten,

wenn die Quittung erhalten wird, ist die Übertragung beendet,

wenn die Quittung nach einer vorgegebenen Zeit nicht erhalten wird oder negativ ist, den Adresswert (P4) aus der Tabelle B entfernen und mit dem unten beschriebenen Schritt b) fortfahren:

b) wenn sich die Adresse (P4) nicht in der Tabelle B befindet, die Nachricht der Reihe nach an die anderen in der Tabelle C angeführten Transportstationen senden und, nach Erhalt einer Quittung, die Tabelle B aktualisieren;

der Bearbeitungsabschnitt der empfangenden Transportstation (ST2) die folgenden Schritte umfaßt:

c) suchen, ob die empfangene Adresse (P4) in ihrer eigenen Tabelle A verzeichnet ist,

wenn ja, die Nachricht an die lokale Aktionseinheit übermitteln und an die aussendende Transportstation (ST1) eine Quittung senden,

wenn nein, eine negative Quittung an die aussendende Transportstation (ST1) senden.

4. Verfahren nach Anspruch 1, dadurch gekennzeichnet, daß, um parallele Aktivitäten durchzuführen, eine spezialisierte Aktionseinheit (S) definiert wird, die die folgenden Aufgaben erfüllt:

die aktive Nachricht kopieren, wobei in Unternachrichten die Verknüpfungspunkte der späteren Abschnitte festgelegt werden;

die Daten der aktiven Unternachrichten nach der Verknüpfung wieder zusammenfügen, um eine globale aktive Nachricht wiederherzustellen,

den Inhalt der aktiven globalen Nachricht analysieren und ihn der vorgesehenen Aktionseinheit übermitteln.

5. Elektronische Vorrichtung für die verteilte Ausführung einer Aktivität zwischen mehreren verschiedenen Orten (1, 2, 3), welche aktive Elemente (4, 5, 6) umfaßt, die auf die Orte aufgeteilt sind und durch Steuereinheiten (7, 8, 9) gesteuert werden, die ebenfalls auf die Orte aufgeteilt sind und durch Kommunikationsleitungen (10, 11, 12) untereinander verbunden sind, wobei jede einem Ort zugeordnete Steuereinheit mindestens einen Prozessor (13, 14, 15) umfaßt, der mit Speichern und, mit den aktiven Elementen und den Leitingen verbundenen, Ein/Ausgangs-Zwischenstufen verknüpft ist, wobei in dieser Vorrichtung:

die Steuereinheiten (7, 8, 9) jeweils aufgeteilt sind in mindestens eine Aktionseinheit (A1, A2, A3, A4, A5), die einen Bearbeitungsabschnitt unabhängig von den anderen Aktionseinheiten durchführen kann, und jeder Aktionseinheit ein Prozessor und ein Teil des Speichers des Ortes zugeordnet sind, wobei der Speicher der Aktionseinheit in mindestens einen Hauptbereich, in dem eine Reihe von Befehlen für die Durchführung des Bearbeitungsabschnittes eingetragen werden, und eine Vielzahl von Nebenbereichen, welche Zugriffs-Tore (P1-P8) für die Aktionseinheit mit Warteschlangen zur Abspeicherung der mit den anderen Aktionseinheiten ausgetauschten Nachrichten darstellen, geteilt ist;

eine spezialisierte Aktionseinheit, Kern (N1) genannt, definiert wird, die feststellt, wenn ein Abschnitt zu Ende ist, die zu übermittelnden Nachrichten sammelt, ihre Übermittlung, über Ein/Ausgangs-Zwischenstufen und Kommunikationsleitungen gewährleistet und die Auswahl der nächsten von einer lokalen Aktionseinheit zu bearbeitenden Nachricht sichert, dadurch gekennzeichnet, daß:

jede Nachricht in mindestens drei Bereiche strukturiert ist, die die Adresse des aussendenden Zugriffs-Tores, beziehungsweise die Adresse von mindestens einem empfangenden Zugriffs-Tor, beziehungsweise den Text der Nachricht enthalten;

im Speicher jeder Aktionseinheit ein Bereich für den Empfang einer aktiven Nachricht vorgesehen ist, wobei die aktive Nachricht aus einer Reihe von in einem Speicher eingetragenen Befehlen und Parametern besteht und Steuerinformationen, wie zum Beispiel die Liste der für die Durchführung der Aktivität zu verfolgenden Bearbeitungsschritte, enthält, ebenso Begleitinformationen, die den Ausführungszustand der Steuerinformationen beschreiben, sowie Daten, mit denen die späteren Bearbeitungsabschnitte parametrisiert werden, so daß die Aufgaben der Aktionseinheit und der zugeordneten aktiven Elemente einerseits durch Befehle und Daten, die permanent in der Aktionseinheit vorhanden sind, und andererseits durch den Inhalt der aktiven Nachricht festgelegt sind.

6. Vorrichtung nach Anspruch 5, dadurch gekennzeichnet, daß die Aktionseinheiten ein und desselben Ortes (A1, A2) den oder dieselben Prozessoren (13) verwenden.

7. Vorrichtung nach Anspruch 5, dadurch gekennzeichnet, daß jeder Ort eine spezialisierte Aktionseinheit, Transportstation (ST) genannt, umfaßt, die die Übertragung der Nachricht von einem Ort zum anderen über Vermittlung von Kommunikationsleitungen (10, 11, 12) gewährleistet, wobei die Transportstation (ST) einen Speicher umfaßt, in dem ein Bereich für die Aufnahme des Verzeichnisses einer Tabelle A, die die Namen aller lokalen, offenen Tore enthält, einer Tabelle B, die die Namen der entlegenen Tore samt den zugehörigen Orten enthält, und einer Tabelle C, die die Adressen der anderen Transportstationen enthält, vorgesehen ist.

8. Vorrichtung nach Anspruch 5, dadurch gekennzeichnet, daß sie außerdem spezialisierte Aktionseinheiten (S) enthält, die die folgenden Aufgaben erfüllen:

die aktive Nachricht duplizieren und dabei in den Unternachrichten die Verknüpfungspunkte der nachfolgenden Abschnitte festlegen;

die Daten der aktiven Unternachrichten nach der Verknüpfung wieder zusammenfügen, um eine globale aktive Nachricht wiederherzustellen;

den Zusammenhang der eindeutigen aktiven Nachricht analysieren und ihn der vorgesehenen Aktionseinheit übermitteln.

## Claims

1. A method for the distributed execution of an activity by means of several processing assemblies (1, 2, 3), the processing assemblies each comprising at least one processor (13, 14, 15) connected to memories and to input/output interfaces and being interconnected via communication lines (10, 11, 12), in which method:

a) the assemblies are first partitioned to define operators (A1, A2, A3, A4, A5) each capable of executing a processing stage independently of the others, each operator being allocated a processor and a part of the memory site, the memory part dedicated to the operator being divided into at least one main zone in which is recorded a series of instructions for execution of the processing stage, a plurality of secondary zones defining access gates (P1-P8) for the operator, acting as standby lines for storage of messages exchanged with other operators;

b) at each processing stage, the operator executes the instructions from its main memory zone in an asynchronous manner as a function of messages received and present at its access gates (P1-P8) and places, in its access gates, messages intended for other operators and prepared during the processing stage, then transmits a stage completion signal to a specialised operator referred to as a nucleus;

c) the nucleus (N1, N2, N3) receives the stage completion signal, collects the messages to be transmitted, assures their transmission possibly by the intermediary of input/output interfaces and communication lines, and assures the selection of the next message to be processed by a local operator;

characterized in that:

d) each message is formed into three zones containing, respectively, the address of the transmitting access gate (P2), the address of at least one recipient access gate (P4) and the text of the message;

e) each activity to be performed is associated with an active message, the text of which is formed by a series of instructions and parameters recorded in a memory, and comprising control data such as the list of the processing stage to be followed to execute the activity, contextual data describing the state of execution of the control data, data for setting the parameters of the subsequent processing stages;

f) the active message is initially sent to the access gate of the operator corresponding to the first processing stage mentioned in the list of stages;

g) in the course of each stage, the operator in action modifies and up-dates the active message;

h) at the end of a stage, the nucleus analyses the contextual data of the active message to determine the following stage and the address of the gate to which the active message should be sent.

2. A method according to claim 1, characterized in that, at the time of transmitting a message, the nucleus (N1) compares the address (P4) of the recipient access gatl4) of the recipient access gate to a table of open gates, and determines whether the recipient gate belongs to an operator situated at the same site or not, and:

in the case of the same site, the nucleus transmits the message directly into the standby line of the recipient gate.

in the case of different sites, the nucleus transmits the message into the standby line of an access gate of a specialised local operator referred to as a conveying station (ST1), and activates a processing stage of the conveying station.

3. A method according to claim 2, characterized in that

the memory part affected by the conveying station (ST1) of each site furthermore comprises a zone in which has been recorded a table A containing the unique names of all the open local gates, a table B containing the unique names of distant gates with their residence site, a table C containing the network addresses of the other conveying stations (ST2, ST3),

the processing stage of the conveying station (ST1) in transmission comprises the succession of the following stages:

a) enquiring whether the address (P4) of the recipient is in the table B,

in the affirmative, sending the message to the residence site (2) of the recipient operator and awaiting an acknowledgement,

if the acknowledgement is received, the transmission is terminated,

if the acknowledgement is not received by the end of a predetermined time or is negative, extracting the value of the address (P4) from the table B and continuing the following phase b):

b) if the address (P4) of the recipient is not found in table B, sending the message successively to the other conveying stations indexed in table C and, upon receipt of an acknowledgement, up-dating the table B;

the processing stage of the conveying station (ST2) in reception comprises the following phases:

c) enquiring whether the received address (P4) is indexed in its own table A,

in the affirmative, transmitting the message to the recipient local operator and returning an acknowledgement to the transmitting conveying station (ST1),

in the negative, returning a negative acknowledgement to the transmitting conveying station (ST1).

4. A method according to claim 1, characterized in that, in order to execute parallel activities, a specialised operator (S) is defined, which performs the following operations:

recopying the active message whilst specifying in divisional messages the junction points of the subsequent stages,

after the junction, reassembling the data of the active divisional messages to reconstruct an overall active message,

analysing the contents of the overall active message and transmitting the same to the designated operator.

5. An electronic device for the distributed execution of an activity between several different sites (1, 2, 3), comprising active elements (4, 5, 6) distributed between the sites and controlled by control assemblies (7, 8, 9) which are equally distributed between the sites and interconnected via communication lines (10, 11, 12), each control assembly associated with a site comprising at least one processor (13, 14, 15) associated with memories and with input/output interfaces connected to the active elements and to the lines, in which;

the control assemblies (7, 8, 9) are each divided into at least one operator (A1, A2, A3, A4, A5) capable of executing a processing stage independently of the other operators, each operator being associated with a processor and a part of the site memory, the memory part of the operator being divided into at least one main zone wherein is recorded a series of instructions for the execution of the processing stage, and a plurality of secondary zones defining access gates (P1-P8) for the operator with standby lines for storage of messages exchanged with other operators;

a specialised operator, referred to as a nucleus (N1), is defined, which detects the ends of stages, collects the messages to be transmitted, assures their transmission by the intermediary of input/output interfaces and communication lines, and assures the selection of the next message to be processed by a local operator;

characterized in that

each message is formed into three zones containing respectively the address of the transmitting access gate, the address of a recipient access gate at least, and the text of the message;

a zone intended to receive an active message is reserved in the memory of each operator, the active message being formed by a series of instructions and parameters recorded in a memory, and comprising control data such as the list of processing stages to be followed to execute the activity, contextual data describing the state of execution of the control data, and data for setting the parameters of the subsequent processing stages, so that the functions of the operator and of the associated active elements are determined on the one hand by instructions and data permanently retained in the operator and on the other hand by the contents of the active message.

6. A device according to claim 5, characterized in that the operators of one and the same site (A1, A2) utilise the same processor(s) (13).

7. A device according to claim 5, characterized in that each site comprises a specialised operator referred to as a conveying station (ST) which assures the transmission of a message from one site to the other via communication lines (10, 11, 12), the conveying station (ST) comprising a memory wherein is defined a zone for reception of the recording of a table A containing the names of all the open local gates, a table B containing the names of distant gates with their resident site, and a table C containing the addresses of the other conveying stations.

8. A device according to claim 5, characterized in that it also comprises specialised operators (S) which perform the following operations:

duplicating the active message whilst specifying in the divisional messages the junction points of the subsequent stages;

after the junction, reassembling the data of the divisional active messages to reconstruct an overall active message;

analysing the context of the single active message and transmitting the same to the designated operator.

FIG. 1

FIG. 3

FIG. 2

FIG. 4